# EUROPEAN PATENT APPLICATION

(11) **EP 0 752 729 A2**
(43) Date of publication of application: **08.01.1997**
(21) Application number: 96109877.9
(22) Date of filing: 19.06.1996
(51) Int. Cl.: H01M 10/40, H01M 4/58

(54) **Lithium secondary battery**

(30) Priority: 27.06.1995 JP 160365/95
(71) Applicant: HITACHI, LTD., Chiyoda-ku, Tokyo 101 (JP)
(72) Inventor: Takeuchi, Seiji, Hitachioota-shi, Ibaraki 313 (JP); Honbo, Hidetoshi, Hitachi-shi, Ibaraki 316 (JP); Horiba, Tatsuo, Hitachi-shi, Ibaraki 316 (JP); Yamagata, Takeo, Takahagi-shi, Ibaraki 318 (JP); Muranaka, Yasushi, Hitachinaka-shi, Ibaraki 312 (JP)
(74) Representative: Strehl Schübel-Hopf Groening & Partner

(57) **Abstract**

The present invention aims at achieving decrease of an irreversible capacity, and increase of discharge capacity of a negative electrode for a lithium secondary battery, and an improvement of output power density and cycle characteristics of the lithium secondary battery.

The present invention is characterized in using carbon material, which adsorbs or bears an organic compound having a larger partition coefficient in the electrolysis solution than carbon particles, as the negative electrode, or adding the above organic compound into the electrolysis solution for achieving the above aims.

Significant effects in decrease of the irreversible capacity, and increase of discharge capacity of the negative electrode, and the improvement of output power density and cycle characteristics of the lithium secondary battery have been realized.

## Description

### Background of the Invention

### (1) Field of the Invention:

The present invention relates to a negative electrode for lithium secondary battery and a lithium secondary battery, particularly to the negative electrode for lithium secondary battery and the lithium secondary battery, which have preferable discharge capacity, output density, and superior cycle characteristics, and furthermore, which enable a carbon negative electrode to decrease its irreversible capacity. The lithium secondary battery can be used as a power source for a memory back up, portable apparatus driving device, and the like.

### (2) Description of the Prior Art:

As a negative electrode of the lithium secondary battery, Li metal and an alloy of Li-Pg group have been used conventionally. However, the above conventional negative electrode had defects such as causing a short circuit with a positive electrode by precipitation of resin-like lithium, and a low energy density. Currently, in order to overcome such defects, research on using carbon for the negative electrode is performing actively. For instance, JP-A-63-114056 (1988) and JP-A-62-268056 (1987) disclosed some results of the research. Furthermore, when carbon is used as a negative electrode, it is a well known fact that a part of solvent as the electrolysis solution is decomposed. Therefore, an invention relating to the electrolysis solution is disclosed in JP-A-5-290881 (1993). According to JP-A-5-290881 (1993), a lithium secondary battery having superior cycle endurance characteristics and low temperature characteristics can be provided by adding ethyl propionate to the electrolysis solution composed of esters.

However, none of the above prior art did not realize the theoretical discharge capacity of the carbon in addition to the decrease of the irreversible capacity (initial charge capacity-initial discharge capacity) of the carbon negative electrode in the lithium secondary battery using the carbon negative electrode, and their power density and cycle characteristics were not sufficient.

### Summary of the Invention

### (1) Objects of the Invention:

The object of the present invention is to solve the above problems of the lithium secondary battery using a carbon negative electrode, and to provide the lithium secondary battery using a carbon negative electrode, wherein the irreversible capacity of the negative electrode is decreased, and concurrently, power density, discharge capacity, and cycle characteristics of the battery are improved further.

### (2) Methods for solving the Problem:

On the basis of the following findings obtained by the extended research on the above problems by the inventors of the present invention, the present invention was completed.

The results of embodiments, when four kinds of carbon and three kinds of electrolysis solutions are used, on the initial discharge capacity, the irreversible capacity, and the cycle characteristics of carbon negative electrode are shown semi-quantitatively in Table 1. The method for fabricating the negative electrodes used in the embodiment shown in Table 1 are explained hereinafter. The used carbon were as follows;
- T:: Natural graphite treated thermally for purification
- V:: Carbon fiber obtained by vapor phase growth
- J:: Artificial graphite
- C:: Natural graphite

A paste was prepared by mixing respective of the above carbon with a solution, wherein ethylene-propylene-diene terpolymer (abbreviated as EPDM hereinafter) as a binder was dissolved into diethylbenzene (abbreviated as DEB hereinafter). The paste was applied onto an electric collector copper foil of about 20 µm thick so that the ratio of the carbon and EPDM to be 94:6 by weight, dried in vacuum at 80 °C for 3 hours after dried in air, and fabricated a negative electrode with a pressure of 0.5 ton/cm². Subsequently, in order to evaporate DEB which is the solvent for EPDM, the negative electrode was dried in vacuum at 150 °C for 2 hours. The results shown in Table 1 were obtained by cycle tests on combinations of the above respective negative electrodes with Li metal as an opposed electrode using a porous film made of polypropylene and a porous film made of polyester as separators. As electrolysis solution, a combination of one mole LiPF₆ and ethylene carbonate-dimethoxyethane (Abbreviated as EC-DME hereinafter), EC-diethylcarbonate (abbreviated as EC-DEC hereinafter), or EC-dimethoxycarbonate (abbreviated as EC-DMC hereinafter) was used. Lithium metal was used as a reference electrode. The charge and discharge velocity in the embodiment was 120 mA per one gram of carbon, and potential width was 10 mV ∼ 1000 mV.

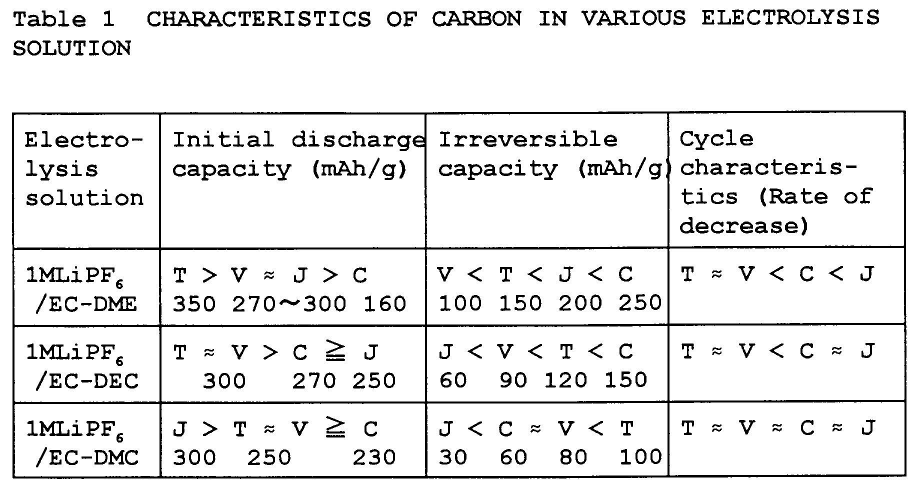

The cycle characteristics, or the rate of decrease, in Table 1 indicates a relationship of degrees of capacity decrease in the initial discharge capacity per every cycles, and a less value in the rate of decrease means a better combination of the carbon and the electrolysis solution. As one of the conditions required generally for the electrolysis solution of lithium battery, a large solubility for inorganic salts, i.e. solutes, is required. As one of such electrolysis solutions, cyclic esters such as propylene carbonate (abbreviated as PC hereinafter) or EC can be used. However, there is a defect that rapid charge and discharge can not be performed if it is used alone, because the above solvent has a large viscosity. In order to resolve the above defect, solvents mixed with ethers such as DME, DEC, DMC, and the like, are generally used. Table 1 indicates the result of evaluation on the four kinds of carbon using the conventional solvents. As Table 1 shows, it has been revealed that the irreversible capacity which decrease the energy density of the battery varied significantly depending on the combination of the electrolysis solution and the carbon. The reason is assumed that the electrolysis solution decomposes by a side reaction in the process of the first charging, and a capacity caused by the decomposition current is added to an intercalation capacity of Li+. And after the first discharge, the capacity is determined only by the current value depending on the intercalation and de-intercalation current of the Li+. Furthermore, as an interesting experimental observation, an experimental result of charge-discharge test was obtained using a negative electrode which was prepared by the same manner as the previously described process of manufacturing negative electrode made of carbon but stopping the process at fabrication of the negative electrode with the pressure of 0.5 ton/cm² after drying at 80 °C, it means that the process of final heat treatment at 150 °C in vacuum for 2 hours is omitted. As the result, the negative electrode obtained by the heat treatment at 80 °C indicated better discharge capacity by about 20 % and lower irreversible capacity by about 16 % than the capacities of the negative electrode obtained by the heat treatment at 150 °C. In accordance with the above described two experimental results, an intercalation reaction of Li+ into an interspace between carbon layers at charging time can be considered as follows;

When Li+ intercalates into an interspace between carbon layers, the Li+ is being formed a solvation with solvent molecules having a large molecular diameter, and an irreversible capacity is generated by decomposing a part of the solvent of the solvation at entrances between the carbon layers (reaction active sites) without entering into the interspace between the carbon layers smoothly. At the same time, a coulomb efficiency of the charge-discharge operation after the first time becomes approximately 100 %, because a part of the Li+ becomes inactive and covers the reaction active sites. On the basis of the above assumption, the result shown in Table 1, which means that the irreversible capacity varies significantly depending on variation in kinds of solvent and carbon, can be understood as natural. On the other hand, the result on the negative electrode prepared by the heat treatment at 80 °C can be explained by the following reason;

The negative electrode prepared by the heat treatment at 80 °C has residual DEB, a solvent for EPDM binder, which is adsorbed on the surface of the carbon. When charge and discharge operation is performed under the above described condition, the Li+ forming a solvation with the solvent is substitutionally inserted once into an interspace between DEB layers when it is intercalated between the carbon layers, and subsequently, intercalated into the interspace between the carbon layers, because the DEB has a stronger affinity with the carbon and the Li+ than the electrolysis solution. Accordingly, as the result that the electrolysis solution can not reach in the vicinity of the entrance of the Li+ intercalation, the decomposition reaction is suppressed and the irreversible capacity is decreased. If the DEB does not exist, the Li+ forming the solvation with the electrolysis solution requires an energy for isolation from the solvent having a large molecular radius when the Li+ is intercalated into the interspace between the carbon layers. However, if the DEB is adsorbed on the surface of the carbon, the energy for isolation from the solvent can be reduced, because the Li is intercalated after substituted with the DEB. As the result, if the velocity of charge and discharge is constant, the intercalation and deintercalation of Li+ can be performed readily, and an advantage, i.e. an apparent increase in discharge capacity, can be achieved. The present invention has been achieved on the basis of the above experimental observation and detailed consideration.

The present invention provides a lithium secondary battery, wherein a negative electrode is composed of carbon material bearing or adsorbing an organic substance having a larger partition coefficient (an amount of material existing in the carbon phase/an amount of material existing in the electrolysis solution) or a selectivity coefficient than the coefficients of the electrolysis solution to the carbon material used as the negative electrode of the lithium secondary battery, and the organic substance is mixed or dissolved into the electrolysis solution.

As the carbon material for the present invention, carbon particles having a high crystallinity can be used. For instance, natural graphite, carbon material obtained by heat treatment at least 2500 °C of readily graphite forming carbon material obtained from kish graphite, petroleum cokes, coal pitch, and the like, graphite scarcely forming material, and the others are usable. An average particle size of the above carbon particles is desirably less than about 50 µm, and preferably in a range of 1 µm ∼ 50 µm. Shape of the carbon particle of spherical, massive, flaky, fibrous, or their pulverized form can be used.

As a carrier or an adsorbing organic material, an aromatic compound stable in the electrolysis solution, which has a larger partition coefficient or a larger selectivity coefficient in the electrolysis solution than carbon, for instance, benzene, naphthalene, anthracene, and their derivatives are preferable. The bearing amount is less than 10 % by weight, and desirably in a range of 2-5 % b weight. The above organic compounds can be used in a condition of mixing with the electrolysis solution or dissolving into the electrolysis solution. The mixing or dissolving amount of the organic compounds is less than 5 % by weight, desirably in a range of 0.2 -3.0 % by weight.

The negative electrode is prepared using the carbon material explained above and a binder. As the binder, materials which are not reactive with the electrolysis solution, for instance, EPDM, polyvinylidene fluoride (abbreviated as PVDF hereinafter), polyflon dispersion, and the like, can be used. The blending amount of the binder is desirably in a range of 1-30 % by weight to the amount of carbon, and preferably in a range of 5-15 % by weight. The shape of the negative electrode composed of the mixture of the above agents can be fit for the shape of the battery by forming sheet or film, or packing into metallic foil or porous metal of a film shape etc. The thickness of a layer composed of the mixture of the agents is desirably in a range of 10-200 µm.

The negative electrode obtained by the method explained above can be used for composing a preferable lithium secondary battery by combining with a conventional active material for the positive electrode, a separator, and an electrolysis solution. As the separator, porous polypropylene, polyethylene, and other polyolefine group porous film can be used. As the electrolysis solution, a mixed solvent of at least two kinds of solvents such as PC, EC, DME, DEC, DMC, and methylethylcarbonate (MEC), and the like, can be used. Furthermore, the maximum advantage can be realized by dissolving or mixing the organic compounds relating to the present invention. As electrolytes, for instance, LiPF₆, LiBF₄, LiClF₄, and the like can be used by dissolving into the above solvent.

In order to decrease the irreversible capacity, increase the discharge capacity, and improve the power density and the cycle characteristics of the negative electrode made of carbon for a lithium secondary battery, the negative electrode made of carbon material bearing or adsorbing an organic compound having a larger partition coefficient or a larger selectivity coefficient in the electrolysis solution than carbon and the electrolysis solution dissolving or mixing the above organic compounds are used in composing the lithium secondary battery. Consequently, the effects of the electrolysis solution at the surface of the negative electrode carbon were suppressed, and the above objects were achieved.

### Brief Description of the Drawings

FIG. 1 is a graph indicating a relationship between the discharge capacity, irreversible capacity ratio, and DEB bearing amount of the DEB bearing negative electrode made of carbon,
FIG. 2 is a graph indicating a relationship between the discharge capacity, irreversible capacity ratio, and DEB concentration in electrolysis solution.

### Description of the Preferred Embodiments

### (Embodiment 1)

Carbon material which bore DEB by 2 % by weight was prepared by suspending 1.96 g artificial graphite (central diameter: 26 µm) sufficiently into 10 ml xylene containing 40 mg DEB, and drying at 60 °C in vacuum for 3 hours. A negative electrode was prepared by adding a solution of N-methyl pyrrolidone (abbreviated as N-MP hereinafter) containing PVDF to the carbon material which bore DEB as a binder so that the PVDF became 10 % by weight to the carbon material for forming paste, applying the mixed paste on a copper foil of 20 µm thick which was an electric collector, drying in air, subsequent drying at 60 °C in vacuum for 3 hours, and fabricating the shape of the negative electrode with a pressure of 0.5 ton/cm².

### (Embodiment 2)

Carbon material which bore DEB by 5 % by weight was prepared by suspending 1.90 g artificial graphite used in the embodiment 1 sufficiently into 10 ml xylene containing 100 mg DEB, and drying at 60 °C in vacuum for 3 hours. A negative electrode was prepared using the carbon material by the same manner as the embodiment 1.

### (Embodiment 3)

Carbon material which bore DEB by 10 % by weight was prepared by suspending 1.80 g artificial graphite used in the embodiment 1 sufficiently into 10 ml xylene containing 200 mg DEB, and drying at 60 °C in vacuum for 3 hours. A negative electrode was prepared using the carbon material by the same manner as the embodiment 1.

### (Comparative example 1)

A negative electrode was prepared using the artificial graphite itself (bearing no DEB) used in the embodiment 1 by the same manner as the embodiment 1.

### (Embodiment 4)

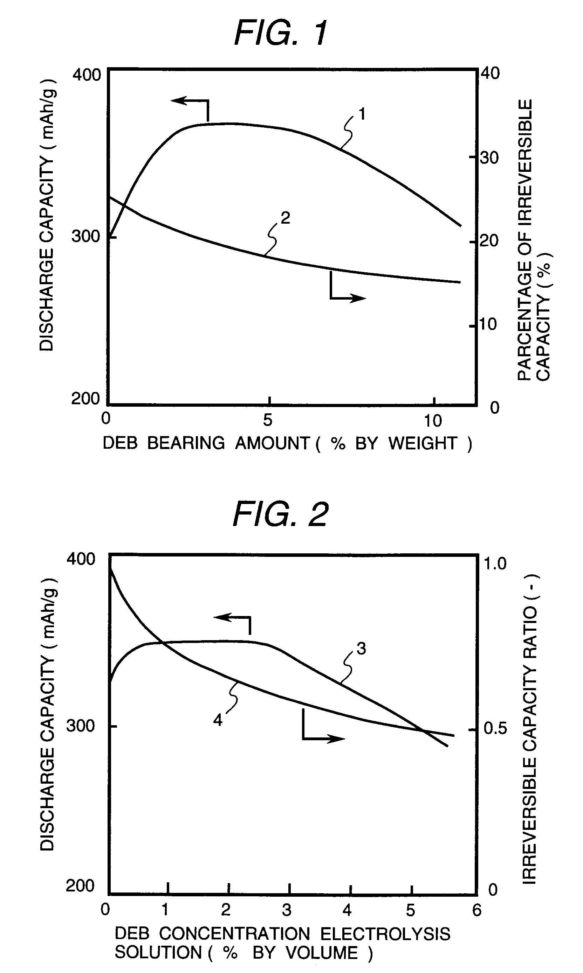

Respective of the negative electrodes obtained by the embodiments 1, 2 and the comparative example 1 was combined with a lithium metal opposite electrode and a polyethylene group film as a separator, and a cycle test was performed at a charge discharge velocity of 80 mA per one gram carbon with a potential width of 10 mV-1000 mV using 1MLiPF₆/EC-DMC as an electrolysis solution and Lithium metal as a reference electrode. The obtained results are indicated in FIG. 1, wherein the charge capacity 1 is the value obtained at the 20th cycle, and the percentage of irreversible capacity 2 is the value obtained from the first cycle of charge discharge capacities. Referring to FIG. 1, the discharge capacity of the negative electrode obtained by the embodiments 1 and 2 are largest, that is 365 mAh/g, in comparison with the value, 300 mAh/g, obtained with the negative electrode of the comparative example 1. The discharge capacity of the negative electrode bearing 10 % by weight DEB in the embodiment 3 shows a tendency to decrease as 315 mAh/g. On the other hand, the percentage of irreversible capacity decreases from 23 % of the negative electrode bearing no DEB to 15 % of the negative electrode bearing 10 % by weight DEB, in such a manner that the irreversible ratio decreases in accordance with increase in the bearing amount of DEB. Accordingly, the advantages of the present invention have been clearly recognized.

### (Embodiment 5)

The negative electrodes obtained by the comparative example 1 was combined with a lithium metal opposite electrode and a polyethylene group film as a separator, and a cycle test was performed at a charge discharge velocity of 80 mA per one gram carbon with a potential width of 10 mV-1000 mV using 1MLiPF₆/EC-DMC as an electrolysis solution and Lithium metal as a reference electrode. At that time, DEB was added into the electrolysis solution to give a concentration in a range of 0-5 % by weight. The obtained results are indicated in FIG. 2, wherein the charge capacity is the value obtained at the 20th cycle, and the irreversible capacity ratio is the value obtained from the first cycle of charge discharge capacities by normalizing taken the irreversible capacity at no DEB as 1.0. In FIG. 2, the curve 3 indicates the discharge capacity, and the line 4 indicates the irreversible capacity ratio. As shown with the curve 3 in FIG. 2, the discharge capacity indicates the largest value when the concentration of DEB in the electrolysis solution is in a range of 0.2-3.0 % by volume. On the contrary, the irreversible capacity ratio decreases as the concentration of the DEB in the electrolysis solution increases from zero. Accordingly, the effect of adding the DEB is clearly recognized. However, in view of the energy density, which can be assumed from the relationship between the discharge capacity and the irreversible capacity, it was revealed that the concentration of the DEB was preferably in a range of 0.2 -1.0 % by weight.

### (Embodiment 6)

Using the negative electrode obtained by the embodiment 2, a positive electrode made of lithium cobaltate (LiCoO₂), a separator made of polyethylene film, and an electrolysis solution of 1MLiPF₆/EC-DMC, a battery of type AA was prepared, and its performance was evaluated. The battery indicated a battery capacity of 330 Wh/l at the third cycle, and the value was not changed even after 110 cycles.

### (Embodiment 7)

Using the negative electrode obtained by the comparative example 1, a positive electrode made of lithium cobaltate (LiCoO₂), a separator made of polyethylene film, and an electrolysis solution of 1MLiPF₆/EC-DMC added with DEB to be 0.5 % by weight based on the finding of the embodiment 5, a battery of type AA was prepared, and its performance was evaluated. The battery indicated a battery capacity of 350 Wh/l at the third cycle, and the value was not changed even after 130 cycles.

In accordance with the negative electrode and the battery system obtained by the present invention, that is, the negative electrode bearing or adsorbing the organic compound having a larger partition coefficient or a larger selectivity coefficient in the electrolysis solution than carbon material for the negative electrode, for instance diethylbenzene and the like, or the electrolysis solution containing the above organic compound by dissolving or mixing are used, the following advantages can be obtained. That is, the irreversible capacity of the negative electrode is decreased, the discharge capacity of the battery is improved, and concurrently, a significant improvement in output power density and cycle characteristics of the battery has become possible.

## Claims

1. A lithium secondary battery comprising;
a negative electrode composed of carbon material which can adsorb or desorb lithium ions,
non aqueous electrolysis solution,
a separator, and
a positive electrode composed of an oxide containing lithium, wherein
said carbon material composing said negative electrode bears or adsorbs an organic compound having a larger partition coefficient in said electrolysis solution than said carbon material.

2. A lithium secondary battery comprising;
a negative electrode composed of carbon material which can adsorb or desorb lithium ions,
non aqueous electrolysis solution,
a separator, and
a positive electrode composed of an oxide containing lithium, wherein
said electrolysis solution contains by dissolving or mixing an organic compound having a larger partition coefficient in said electrolysis solution than said carbon material by equal to or less than 3 % by volume.
